(19) Europäisches Patentamt
European Patent Office
Office européen des brevets

(11) **EP 1 050 544 A1**

(12) **EUROPÄISCHE PATENTANMELDUNG**

(43) Veröffentlichungstag:
08.11.2000 Patentblatt 2000/45

(51) Int. Cl.⁷: **C08B 37/00**, C08B 37/04,
C08B 37/14, C08L 5/04,
C08L 5/14

(21) Anmeldenummer: 00109065.3

(22) Anmeldetag: 02.05.2000

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **05.05.1999 DE 19920688**

(71) Anmelder: **Kuhn, Manfred, Dr.**
**80797 München (DE)**

(72) Erfinder: **Kuhn, Manfred, Dr.**
**80797 München (DE)**

(54) **Radiolytisch modifizierte Heteropolysaccharide**

(57)     Heteropolysaccharide pflanzlichen Ursprungs werden durch Behandlung mit ionisierenden Korpuskular- oder Photonenstrahlen modifiziert. Dies führt zu neuartigen Derivaten aus Algenextrakten und Pflanzensamenendospermmehlen. Die neuen Heteropolysaccharidderivate enthalten keine Fremdelektrolytzusätze, sind besonders aschearm, frei von Prozesschemikalien, und zeichnen sich durch niedrige Keimzahlen aus. Es werden molekulargewichtsreduzierte polymere Kohlenhydrate mit verändertem Kaltwasserlöslichkeitsverhalten erzeugt, die sich insbesondere für Hydrokolloidanwendungen in wässrigen Systemen eignen.

**Beschreibung**

Die unter dem Sammelbegriff Heteropolysaccharide zusammengefaßten chemischen Verbindungen repräsentieren ein wichtiges Teilgebiet der Kohlenhydrate. Als eine der vier großen Naturstoffklassen sind Kohlenhydrate neben Nucleinsäuren, Proteinen und Lipiden ein essentieller Bestandteil lebender Organismen. Polymere Kohlenhydrate stellen den weitaus größten Teil der organischen Materie auf der Erdoberfläche. Allein die Cellulose als polymeres Kohlenhydrat existiert in unvorstellbaren Mengen. Das Ausmaß dieses Vorrates kann erahnt werden, wenn man bedenkt, daß im Pflanzenbereich jedes Jahr ewa $10^{11}$ Tonnen neu entstehen und der bereits vorhandene globale Bestand das zehnfache dessen übersteigt. Als mengenmäßig zweitwichtigstes Kohlenhydrat ist die Stärke mit einer Weltjahresproduktion von ca. 20-30 Millionen Tonnen für die menschliche Ernährung sowie, ebenso wie die Cellulose, als Rohstoff für die chemische Industrie, von elementarer Bedeutung. Der Name Kohlenhydrate als Sammelbegriff ist, wie viele Bezeichnungnen in der organischen Chemie, historisch zu verstehen. Obwohl heute noch angewandt, trifft die Definition „Hydrat der Kohle" mit der Summenformel $C_n(H_2O)_n$ für manche „Kohlenhydrate" nicht zu, während andere Verbindungen, die der Definition entsprechen, wie z.B. die Milchsäure, keine Kohlenhydrate sind. Der Begriff „polymere Kohlehydrate" wird auch beschrieben durch die Bezeichnung „Polysaccharide", woraus der makromolekulare Aufbau aus monomeren Zuckern oder Zuckerderivaten besser ersichtlich wird. Polysaccharide sind also Kohlenhydrate mit hohem Molekulargewicht. Sind Polysaccharide aus nur einer Monosaccharidsorte aufgebaut, spricht man von Monopolysacchariden, im Falle von Cellulose oder Starke auch von Glucanen. Sind die Monopolysaccharidbausteine nur durch einen einzigen glycosidischen Bindungstyp verknüpft, spricht man von perfekt linear aufgebauten Polysacchariden, z.B. bei Cellulose mit (1,4) ß -glycosidisch verknüpften Glucose-Einheiten oder bei Amylose mit (1,4) α -Verknüpfungen der Glucose-Bausteine. Verzweigte Polysaccharide enthalten verschiedene Bindungstypen, z.B. (1,6) α-Bindungen an den Verzweigungspunkten neben linearen (1,4) β-Bindungen in der Hauptkette (z.B. das Amylopektin verschiedener Stärkesorten).

Oftmals wird im Zusammenhang mit wasserlöslichen Polysacchariden der Begriff „Hydrokolloide" verwendet, insbesondere dann, wenn es sich um prinzipielle oder anwendungstechnische Aspekte der Chemie, der Funktionalität oder den Einsatz von wasserlöslichen Makromolekülen handelt. Laut Chemielexikon Römpp (Georg Thieme Verlag, Stuttgart 1997, 10.Auflage, Band 3, Seite 1837) handelt es sich jedoch bei dem Begriff „Hydrokolloide" um eine unzweckmäßige Bezeichnung für (teilweise) wasserlösliche natürliche oder synthetische Polymere, die in wässrigen Systemen Gele oder viskose Lösungen bilden, da mit diesem Begriff auch Proteine mit ähnlichen funktionellen Eigenschaften belegt werden. Polysaccharide sind wasserlösliche oder stark wasserquellbare Stoffe, die in wässrigen Systemen kolloidale, viskose Lösungen oder Dispersionen mit plastischem oder pseudoplastischen Fließverhalten ergeben. Daraus leiten sich die im vorliegenden Fall gewünschten funktionellen Eigenschaften wie verdickende Wirkung, Wasserbindevermögen, Wasserrückhaltevermögen, Filmbildung, Stabilisierung von Emulsionen und Suspensionen bei mehrphasigen Systemen, Ballaststofffunktionen sowie gelierende und texturierende Fähigkeiten ab. Heteropolysaccharide sind aus unterschiedlichen monomeren Zuckereinheiten aufgebaut, selten jedoch aus mehr als fünf Einzelmonosacchariden. (Ullmann's Encyclopedia of Industrial Chemistry, VCH Verlagsgesellschaft Weinheim, 1994, 5.Auflage, Vol. A 25, Seite 2). Die funktionellen und anwendungstechnischen Eigenschaften von wasserlöslichen Polysacchariden werden maßgeblich von deren Molekulargewicht und Polymerisationsgrad bestimmt. Die Viskosität ihrer Lösungen steht mit der Molmasse in unmittelbarem Zusammenhang, Der Verlauf von Viskositäts-/Konzentrationsgraphen ist für den jeweiligen Produkttypus charakteristisch und steht ebenfalls zum Durchschnittsmolekulargewicht und somit zum durchschnittlichen Polymerisationsgrad der Monomerzucker in enger Abhängigkeit. im folgenden werden daher die Begriffe „Viskosität" und Molekulargewicht wechselweise verwendet, sofern nicht auf einen besonderen Zusammenhang hingewiesen wird. Heteropolysaccharide finden ausgedehnte Verwendung als rheologische Additive in der Medizin, Pharmazie, Kosmetik,Nahrungsmittel-,Tierernährungs-, Papier-, Textil-, Druck-, Leder-, Erdöl-, Bergbau-, Sprengstoff-und Baustoffindustrie.

Bekannte Heteropolysaccharide sind unter eher allgemeinen Bezeichnungen wie Alginate, AgarAgar, Carrageen bzw. Carrageenate, Galaktomannane, Konjak (Glucomannan), Tamarinde, Pektine, Pflanzenexudate wie Gummi arabicum, Gum Karaya , Gum Ghatti, Gum Tragacanth, extracelluläre Polysaccharide wie Xanthan, Welan, Gellan, Rhamsan, Dextran, Curdlan, Pullulan, Scleroglucan, dem Fachmann wohl vertraut und finden verbreitet Anwendung. Homopolysaccharide wie Cellulose und wasserlösliche Cellulosederivate, Stärke und wasserlösliche Stärkederivate sowie Hemicellulosen sind ebenso wie fermentativ gewonnene extracelluläre Heteropolysaccharide oder Pflanzenexudate nicht Gegenstand der Erfindung

Industriell bedeutsame Heteropolysaccharide pflanzlichen Ursprungs, die besonders vorteilhaft durch die vorliegende Erfindung modifiziert und verwendet werden können, sind Algenextrakte und Mehle aus den Endospermabsehnitten von Leguminosensamen.
Algenextrakte sind die aus Braunalgen (Phaeophyceae) und Rotalgen (Rhodophyceae) gewonnenen Heteropolysaccharide.

Aus Braunalgen werden die Alginsäure bzw. deren Salze hergestellt. Das kommerziell wichtigste Salz der Alginsäure ist mit weitem Abstand das Natriumalginat. Ebenfalls von industrieller Bedeutung sind Kalium-, Ammonium- und Magnesiumalginate sowie der Alginsäureester Propylenglykolalginat. Die freie Alginsäure selbst ist unter Normalbedingungen nicht beständig und wasserunlöslich. Alginate bestehen aus wechselweise miteinander verknüpften (1,4) β-D-Mannopyranosyluronsäure- und (1,4) α-L-Gulopyranosyluronsäure-Einheiten. Die Guluronsäure- und Mannuronsäurebausteine sind sowohl blockweise als sogenannte G-Blöcke und M-Blöcke als auch alternierend als Guluronopyranosyl-und Mannuronopyranosyl-Reste angeordnet und entsprechend des Alginsäuresalztypes mit dem jeweiligen Kation neutralisiert. Die prozentuale Wichtung der Polymannuronsäureabschnitte, der Polyguluronsäurebereiche und der alternierenden Guluronsäure-/Mannuronsäure-Bezirke hängt von der Algenart ab und ist ausschlagebend für eine vornehmlich gelierende oder mehr verdickende Wirkung von Alginaten. Überwiegt der Guluronsäureanteil, so weist das Alginat mehr gelierende Eigenschaften auf, bei einem hohem Mannuronsäureanteil treten die verdickenden Wirkungen in den Vordergrund. Deshalb werden in der Lebensmittelindustrie gezielt hochguluronsäurehaltige Alginate aus Laminaria hyperborea verwendet, wenn Gelstrukturen gewünscht werden, oder andererseits Natriumalginat aus Laminaria japonica oder Ascophyllum nodosum, wenn verdickende Eigenschaften erzielt werden sollen. Kommerziell bedeutsame Algenrohmaterialien sind Laminaria japonica, Macrocystis pyrifera, Laminaria digidata, Laminaria hyperborea, Ascophyllum nodosum, Lessonia nigrescens und Ecklonia maxima.

Carrageenane und Agar sind Extrakte aus Rotalgen und gehören chemisch zur Gruppe der Galaktane. Sie weisen jedoch nicht, wie Cellulose und Stärke, nur einen 1,4-Glycosid-Bindungstyp auf Die Rotalgen-Galaktane besitzen vielmehr abwechselnd α-( 1,3)-Bindungen und β-(1,4)-Bindungen und werden deshalb als a-b-a-Typ Polysaccharide charakterisiert. Carrageen ist chemisch kein homogenes Produkt, sondern umfaßt die Produktgruppe von sulfatierten Galaktanen, wobei Teile der Galactopyranose-Bausteine als 3 ,6-Anhydrogalactose Gruppierung vorliegen. Aus den Rotalgenextrakten lassen sich bestimmte Fraktionen von Carrageenan gewinnen, die chemisch durch ihre Struktur definiert sind und mit griechischen Buchstaben gekennzeichnet werden. Ein Formelbild mit der idealisierten Struktur von KappaCarrageenan findet sich bei Robert L. Davidson „Handbook of Water-Soluble Gums and Resins", Figur 5.2, Mc Graw-Hill Book Company (1980).

Kommerzielle Bedeutung haben nur Lambda-, Jota- und Kappa-Carrageenan. Die unterschiedlichen Eigenschaften finden ihre Erklärung hauptsächlich durch Unterschiede im Gehalt an Anhydrogalaktose und Sulfatestergrupppen. Durch den Anhydrogalaktosering werden die Galaktane stärker hydrophobiert, d.h. die Wasserlöslichkeit nimmt ab. Andererseits verleiht die Sulfatgruppe den Galaktanen mehr hydrophile Eigenschaften, die sich in zunehmender Wasserlöslichkeit ausdrücken. Weiterhin hat das Vorliegen von Sulfatestergruppen zur Folge, daß sich die Eigenschaften von Carrageen als anionisches Polysaccharid in wässrigen Systemen gezielt durch bestimmte Kationen steuern lassen. So werden die Geliereigenschaften von Kappa-Carrageenan durch Kaliumionen und von Jota-Carrageenan durch Kalziumionen stark beeinflußt. Geeignete Rotalgenarten zur Carrageenherstellung sind in den Pflanzenfamilien der Gigartinaceae, Hypneaceae, Solieraceae, Phyllophoraceae und Furcellariaceae zu finden, besondere industrielle Bedeutung haben die Arten Eucheuma cottonii, Eucheuma spinosum, Chondrus crispus, Iridaea laminarioides sowie potentiell einige wenige andere wie Gigartina, Hypnea und Furcellaria.

Galaktomannane sind, wie die Stärke, pflanzliche Reservepolysaccharide, die in den Endospermzellen vieler Leguminosensamen vorkommen. Bei der Keimung der Samen werden sie enzymatisch abgebaut und dienen als Nährstoffe für den Keimling. Der Sammelbegriff Galaktomannan umfaßt alle Polysaccharide, die aus Mannose- und Galaktose-Bausteinen aufgebaut sind und darüber hinaus in untergeordnetem Maße auch weitere Zuckerbausteine aufweisen können. Je nach Herkunft gibt es eine verhältnismäßig große Anzahl von Galaktomannanen. Sie kommen hauptsächlich in den Endospermabschnitten der Samen verschiedener Leguminosen (Hülsenfrüchtlern) wie Guar, Johannisbrot, Tara, Sesbania, Cassia, Prosopis, Crotalaria, Indigofera, Honigbohne, Bockshornklee und Flammenbaum vor.

Galaktomannane weisen als gemeinsames Strukturmerkmal eine lineare Polymannan-Kette auf, die aus β-(1,4)-glycosidisch verknüpften Mannopyranoseringen aufgebaut ist. An diese sind am primären Kohlenstoffatom in C6-Stellung als Verzweigung einzelne Galaktopyranoseringe in cc-( 1 ,6)-glycosidischer Bindung fixiert (zur Zählweise der Pyranosekohlenstoffatome wird beispielsweise verwiesen auf: Jochen Lehmann, Chemie der Kohlenhydrate, Georg Thieme Verlag Stuttgart 1976, Seite 44).

Von den zahlreichen bekannten Galaktomannanen werden insbesondere vier gewonnen und verwendet:

Johannisbrotkernmehl (Carubin, Locust Bean Gum) ist seit langem bekannt. Es wird aus den Samen des Johannisbrotbaumes (Ceratonia siliqua L.) gewonnen, der in den Mittelmeerländern beheimatet ist.

Guar (Guargummi, Guaran, Guar Gum, Guarkemmehl) ist heute das weitaus wichtigste Galaktomannan. Es wird aus den Samen der in Indien und Pakistan beheimateten Guarbohne (Cyamopsis tetragonoloba) gewonnen.

Taragummi (Tara Gum) wird erst seit kurzem in geringen Mengen aus den Samen des Tarabaumes (Caesalpinia spinosa) produziert, der vor allem in Peru wächst.

Cassia (Cassiagummi, Cassia Gum, Cassiakernmehl) wird ebenfalls erst in jüngerer Zeit aus den Samen des in Indien vorkommenden Cassiastrauches (Cassia tora syn.obtusifolia) isoliert. Potentielle wirtschaftliche Bedeutung haben Sesbania bispinosa, Prosopis juliflora und Trigonella foenum-graecum.

Die einzelnen Galaktomannane unterscheiden sich wesentlich im Verhältnis der Grundbausteine Galaktose : Mannose. Dieses beträgt bei Cassia idealisiert 1:5, bei Johannisbrotkernmehl 1:4, bei Tara 1:3, bei Guar 1:2 und bei Prosopis nahezu 1:1. Dies führt zu einer stark verschiedenen Substitution an der Polymannan-Hauptkette. So ist im Falle von Prosopis nahezu jeder Mannopyranosylring mit einem Galaktoserest substituiert, bei Guar statistisch gesehen jeder zweite. Beim Tara-Galaktomannan sitzt an jeder dritten Mannoseeinheit ein Galaktosesubstituent, beim Johannisbrotkernmehl an jeder vierten und bei CassiaGalaktomannan an jeder fünften. Dies führt zu drastischen Unterschieden im physikalischen und chemischen Verhalten der einzelnen Galaktomannane. So ist Prosopisgalaktomannan nahezu vollkommen kaltwasserlöslich und in dieser Hinsicht dem Guargalaktomannan weit überlegen Taragalaktomannan nimmt eine Mittelstellung ein, Johannisbrotkemmehl ist kaum kaltwasserlöslich und muß zur Viskositätsentwicklung erst 20-30 Minuten auf 70-80 °C erhitzt werden. Cassiagalaktomannan ist fast ebenso wie Cellulose nahezu unlöslich in kaltem Wasser und geht auch durch Kochen nicht vollständig in Lösung. Um volle Kaltwasserlöslichkeit zu erreichen, ist ebenso wie bei der Cellulose eine chemische Derivatisierung, vorzugsweise eine ionische oder nichtionische Veretherung mit Substitutionsgraden von mindestens 0,2 notwendig. Auf die gleichen Strukturunterschiede ist das unterschiedliche Verhalten als Geliermittel in synergistischen Mischungen mit Kappa-Carrageen , Xanthan und Agar-Agar zurückzuführen. So bildet Cassia in Kombination mit Kappa-Carrageen stärkere Gele als die Kombination Carrageen/Johannisbrotkernmehl und diese wiederum stärkere Gele als Carrageen/Tara. Guar zeigt nahezu keinen Synergismus und Prosopis ist zu keinerlei Wechselwirkung mehr mit Carrageen in der Lage. Dieses Verhalten wird in der EP 0 139 913 eingehend beschrieben.

Tamarindenkernmehl wird aus den Samen des in Südindien beheimateten Tamarindenbaumes (Tamarindus indica) gewonnen. Der Tamarindenbaum gehört ebenso wie der Johannisbrotbaum, der Tarabaum und die Cassia-Arten zur Pflanzenfamilie der Caesalpiniaceae, die mit den verwandten Pflanzenfamilien Mimosaceae und Fabaceae die Pflanzenordnung Fabales (Leguminosen) bildet. Die Familie der Fabaceae, in die der Guar einzuordnen ist, wird auch als Schmetterlingsblütler oder Papilionaceae bezeichnet. Trotz der engen taxonomischen Beziehungen besteht das Tamarindenendospermpolysaccharid nicht aus Galaktomannan. Die chemische Struktur weist Tamarindenkernmehl als Galaktoxyloglukan aus (Michael J. Gidley, Carbohydrate Research, Band 214, 1991, Seite 299). Die durchschnittliche Primärstruktur läßt sich am besten mit einer celluloseähnlich aufgebauten Hauptkette (Rückgrat) aus β-( 1,4)-verknüpften D-Glucopyranoseringen mit über die C6-Position α-( 1,6)-gebundenen Xylopyranosegruppen, die wiederum teilweise mit Galaktoseeinheiten über β-(1,2)-Positionen verbunden sind, beschreiben. Das Verhältnis von Galaktose : Xylose Glucose wird mit 1: 2,25: 2,8 angegeben. An anderer Stelle werden Verhältnisse von Galaktose : Xylose : Glucose mit 3 : 6 : 7 genannt (Peter R. Lang: Assoziationsverhalten und thermoreversible Gelierung von Tamarind Samen Polysaccharid (TSP), Dissertation Januar 1991, Universität Freiburg, Seite 88). Tamarindenkernmehl zeigt in mancher Weise ähnliches Verhalten wie Stärke und wird deshalb mit dem Term „Amyloid" belegt. So ist Tamarindenkernmehl ebenso wie Kartoffel-, Mais-, Weizen-, Tapioka-,oder Reisstärke nicht löslich in kaltem Wasser, sondern erfordert wie diese Stärkearten zur vollständigen Verkleisterung und somit zur maximalen Viskositätsausbildung mehrminütiges Erhitzen auf höhere Temperatur. Für gewöhnlich erhitzt man zum Zwecke des vollständigen Auflösens etwa 20 - 30 Minuten auf mindestems 80 °C. Im Unterschied zu den meisten Stärken neigen ausgequollene Tamarindenkernmehl-Lösungen kaum zur Retrogradation wie z.B. Kleister aus Kartoffelstärke. Tamarindenkernmehl ergibt ebenso wie Stärke typische, blaue bis violett-braune Farbreaktionen mit Jod/Kaliumjodid-Lösungen.

Die anwendungstechnische Verwandtschaft zur Stärke kommt in der Praxis auch dadurch zum Ausdruck, daß zur Beschreibung rheologischer Phänomene der in der Stärkeindustrie übliche Brabender-Amylograph eingesetzt wird (P.S.Rao/H.C.Srivastava in R.Whistler: Industrial Gums, 2.Auflage, Academic Press Inc., New York, 1973, Kapitel 17, Seite 369).

Der Zusammenhalt und die Stabilität molekularer oder atomarer Verbände und somit chemischer Verbindungen wird durch die Wechselwirkung der an den Bindungen beteiligten Elektronen der äußeren Atomhüllen erreicht. Energiereiche elektromagnetische oder korpuskulare Strahlen können bei ihrer Wechselwirkung mit Materie zur Ionisation und Anregung von Atomen und Molekülen und so zur Zerstörung der Nah- und Fernordnung chemischer Strukturen führen. Man spricht daher auch von ionisierender Strahlung, im Gegensatz zu nichtionisierender Strahlung, deren Energie zu gering ist, um bei Wechselwirkung mit Materie Jonisations-Prozesse hervorzurufen. Das medizinische Fachgebiet Radiologie macht von dieser Wechselwirkung von ionisierender Strahlung mit biologischer Materie sowohl zu kurativ therapeutischen als auch zu diagnostischen Zwecken seit langem Gebrauch (Felix Wachsmann: Radiologie, edition medizin, Verlag Chemie, Weinheim, 1981). Bei allen Strahlenarten ist für deren Fähigkeit zur Ionisierung grundsätzlich ihre Energie, die einen bestimmten Betrag nicht unterschreiten darf, ausschlaggebend. Der Energieaufwand für die Bildung eines Ionenpaares liegt bei stabilen Gasen in der Größenordnung von 25 bis 40 Elektronenvolt (eV), für die an den chemischen Bindungen beteiligten Elektronen der äußeren Schalen der Atome zwischen 5 und 25 eV. Somit kann als unterste Grenze für das Ionisationspotential ein Energieintervall von ungefähr 5 bis 40 Elektronenvolt angegeben werden.

Die Bindungsenergien für die biologisch wichtigsten kovalenten Bindungen liegen zwischen 3 und 6 eV und für die physiologisch wichtigen Wasserstoffbrückenbindungen zwischen 0,2 und 0,5 eV. Durch ionisierende Strahlung können diese Bindungen also gelöst und somit Bausteine der Zellen, (z.B. Proteine, Nucleinsäuren, Biopolymere) zerstört werden.

Die in der Radiologie im allgemeinen eingesetzten Photonen- und Korpuskular-Strahlen besitzen Energiebeträge oberhalb von 1 keV (kilo-Elektronenvolt) und sind deshalb erwartungsgemäß bei der Wechselwirkung mit strahlenabsorbierendem Material zur Ionisation und somit zur Spaltung chemischer Bindungen befähigt.

Eine einfache, energetische Abgrenzung zu nichtionisierender Strahlung, deren Wechselwirkung mit Materie im wesentlichen auf Resonanzphänomenen (Ultraviolett-Absorption, Infrarotspektroskopie) oder thermischen Effekten ( Mikrowellen- und Kurzwellenstrahlung) beruht, kann somit leicht vorgenommen werden.

Die Einteilung der Strahlenenergie verschiedener Photonenarten ist weitgehend historisch bedingt und vornehmlich als Hinweis auf die jeweilige Entstehungsart zu sehen.

Unter ionisierender Strahlung sind Photonen mit kürzeren Wellenlängen und Korpuskularstrahlen mit höheren Energieinhalten als die Ultraviolettstrahlung zu verstehen. Die Wellenlängen der schon deutlich hautschädigenden UV-Strahlung liegen im Intervall 400 - 200 nm (nanometer). Dies entspricht beispielsweise Strahlenenergien von 3,7 - 4,5 eV für die sogenannte UVB-Strahlung, deren Wellenlängen entsprechend zwischen 320 - 280 nm anzusiedeln sind (Krieger/Petzold: Strahlenphysik, Dosimetrie und Strahlenschutz, Verlag B.G.Teubner, Stuttgart 1992, Band 1, Seite 23). Für die vorliegende Erfindung typische ionisierende Strahlenarten sind Gammastrahlen, Röngtenstrahlen und Elektronenstrahlen.

Gammastrahlung und Röntgenstrahlung sind elektromagnetische Strahlungen und somit identisch bezüglich ihrer physikalischen Natur. Die Unterscheidung beruht lediglich auf verschiedenartigen Entstehungsmechanismen: Gammastrahlung tritt bei Umwandlungen von Radionukliden auf (Kernstrahlung), während Röntgenstrahlung beim Abbremsen von zuvor im elektrischen Feld beschleunigten Elektronen im Coulomb-Feld der Atomkerne des Anodenmaterials einer Röntgenröhre entsteht. Diese sogenannte Bremsstrahlung weist jedoch im Gegensatz zur Kernstrahlung ein kontinuierliches Photonenspektrum auf. Der Bereich der Röhrenspannungen konventioneller Röntgenanlagen reicht etwa von 10 - 300 kV (Kilovolt). Die Weichstrahltechnik nutzt Erzeugungsspannungen zwischen 25 und 50 kV für diagnostische Zwecke, während die Hartstrahltechnik,die bei Gewebebehandlungen in 3 - 5 cm Tiefe in der sogenannten Halbtiefentherapie Verwendung findet, mit Röhrenspannungen von 120 - 150 kV arbeitet. Mittels Elektronenbeschleunigern lassen sich ultraharte Röntenstrahlen mit 5 - 40 MeV und mehr erzeugen.

Photonenstrahlung wird daher anschaulich nach ihrer Durchdringungstiefe in weiche (bis 100 keV), harte (100 keV - 1 MeV) und ultraharte (über 1MeV) Strahlung eingeteilt.

Die gebräuchlichsten Gammastrahlenquellen, Kobalt-60 und Cäsium-137, emittieren Gammastrahlen mit diskreten Energien. Die $^{60}$Co - Zerfallskaskade liefert zwei Gamma-Quanten mit 1,17 MeV und 1,33 MeV, $^{137}$Cs sendet Photonen mit 0,662 MeV Energie aus. Beide Strahlenquellen werden häufig in der perkutanen Strahlentherapie eingesetzt. Der Energiebereich für Elektronenstrahlung erstreckt sich von wenigen 100 keV bei Radionukliden bis etwa 50 MeV bei Beschleunigern.

Für die verschiedenen Strahlenquellen ionisierender Strahlung lassen sich Vorteile und Nachteile zur erfindungsgemäßen Verwendung anführen, die in der Natur und der Technologie der jeweiligen Strahlungsart begründet sind.

Kommerzielle Anlagen für die Gammabestrahlung sind seit vielen Jahren Stand der Technik und werden für die Kaltsterilisation von medizinischen Einwegartikeln und zur Abtötung pathogener Mikroorganismen sowie zur Keimzahlreduzierung von Lebensmitteln und Gewürzen eingesetzt. Üblicherweise wird in diesen Anlagen Kobalt-60 als Strahlenquelle verwendet. Dieses Radionuklid hat eine Halbwertszeit von 5,27 Jahren und verliert somit pro Jahr 12,3 % an Energie. Cäsium-137 hat mit 30 Jahren eine vergleichsweise höhere Halbwertszeit und verliert pro Jahr nur 2,3% der vorhandenen Energie, so daß die Notwendigkeit der Aktivitätsaufftischung vor Ort nicht besteht. Jüngste Entwicklungen ermöglichen den Einsatz von modular aufgebauten, transportablen und palettenbeschickbaren Bestrahlungseinheiten mit trocken gelagerter Cäsium-137 Strahlungsquelle, wodurch auf erheblichen, durch bauliche Sondermaßnahmen bedingten Kostenaufwand verzichtet werden kann (Food Technology, 1997, Band 51, Heft 6, Seite 96). Das Ionisierungsvermögen der Cäsium- 137 Gammastrahlung ist bei vergleichbarer Aktivität der Strahlungsquelle allerdings geringer als das der Kobalt-60 Gammastrahlung. Beide Radionuklide benötigen als Permanentstrahler aufwendige Abschirmungsmaßnahmen und unterliegen auch bei Nichtbenutzung einem ständigen Energieabfluß.

Elektronenstrahlen im Energiebereich bis etwa 50 MeV können dank fortschreitender Entwicklung hochfrequenzbetriebener Linearbeschleuniger mit immer weniger Aufwand generiert werden, jedoch liegt ein Nachteil dieser Bestrahlungsart in der vergleichsweisen geringen Eindringtiefe korpuskularer Strahlen in Absorbermaterialien. Für Materie, die im wesentlichen aus Atomen mit geringen Kemladungszahlen aufgebaut ist (Z<8), wie z.B. menschliches Gewebe und andere vergleichbare Stoffe, gilt für die praktische Reichweite von Elektronen im Energiebereich 5 - 35 MeV die halbempirische Formel von Markus (DIN 6809-1):

$$(Z/A)_{eff} \times \rho \times R_p = 0{,}285 \times E_{p0} - 0{,}137.$$

Setzt man in diese Gleichung die Energie in MeV und die Dichte $\rho$ in Gramm pro Kubikzentimeter ein, so erhält man bei Kenntnis der wahrscheinlichsten Eintrittsenergie der Elektronen in das Medium ($E_{p0}$) eine Abschätzung der praktischen Reichweite ($R_p$) der Elektronen in cm (Krieger: Strahlenphysik, Dosimetrie und Strahlenschutz, Verlag B.G.Teubner, Stuttgart 1997, Band 2 , S.327). Dies führt bei pulverförmigen Materialien im Schüttgewichtsbereich von 0,3 - 0,8 $g/cm^3$ zu Elektronenstrahleindringtiefen von 3 - 17 cm. Die Größenordnungen dieser Zahlenangaben machen deutlich, daß sich Elektronenstrahlmodifikationen pulverförmiger Materialien vorteilhaft prozessintegriert, z.B. im Verlauf des Produktaustrags oder der Produktzwischenförderung, beim Hersteller durchführen lassen, wohingegen Gammastrahlenmodifikationen sich besonders für im Lohnauftrag abzuwickelnde, externe Emballagenbehandlungen, vorzugsweise im Palettendurchlaufverfahren, eignen.

Die Stärke der Strahlungsquelle wird bei Radioisotopen durch die Aktivität ausgedrückt, die die Anzahl der Zerfälle im Zeitintervall wiedergibt. Die Maßeinheit ist die reziproke Sekunde mit dem speziellen Namen Beequerel (Bq). Bei Elektronenstrahlen wird die Strahlenstärke durch die Strahuleistung gekennzeichnet. Mit der Umrechnungsbeziehung 1 MeV = $1,6 \times 10^{-13}$ Joule und dem bekannten Energieinhalt der ausgestrahlten Quanten kann ein Leistungsvergleich zwischen Gammastrahlungsquellen und der Leistung eines Elektronenlinearbeschleunigers angestellt werden:

| Co-60 | 1 kW (Kilowatt) | = $2,5 \times 10^{15}$ Bq |
|---|---|---|
| Cs-137 | 1 kW | = $9,5 \times 10^{15}$ Bq |

Die Leistung von 1 kW wird bei einer Elektronenkanone schon bei einer Elektronenenergie von 10 MeV bei einem Stromfluß von 0,1 Milliampere (mA) erreicht.

Maßgeblich für die Strahlenwirkung auf biologisches Material ist die Dosis D, die als absorbierte Energie pro Massenelement des Zielvolumens definiert ist. D hat die Maßeinheit 1 J/kg, der spezielle Name dieser Einheit ist „Gray" (Gy), 1Gy = 1 J/kg.

Die Dauer der Bestrahlung zum Erzielen der gewünschten Dosis hängt von der Dosisleistung, also der pro Zeiteinheit abgegebenen Dosis einer Strahlenquelle, ab. Einige Beispiele für Dosisleistungen sind:

□  Linearbeschleuniger für Elektronen, 10 MeV, 10 kW, etwa $10^6$ Gy/s,

□  Labor-Kobalt-Quelle mit Co-60, $6 \times 10^{14}$ Bq als Punktquelle etwa 0,6 Gy/s (in 0,3 m Abstand) bzw.0,06 Gy/s (in 1,0 m Abstand),

□  kommerzielle Bestrahlungsanlage für medizinische Artikel mit Co-60, $4 \times 10^{16}$ Bq als

□  Flächenquelle etwa 1 Gy/s (in 1 m Abstand).

Hieraus wird ersichtlich, daß die Bestrahlungsdauer für die zum Beispiel bei Lebensmitteln in Frage kommende Dosis D $\leq$ 10 kGy beim Elektronenlinearbeschleuniger in der Größenordnung von Sekunden und darunter, bei Bestrahlungen mit Radioisotopen im Bereich von Stunden und darüber liegt.

Die Behandlung von synthetischen, wasserunlöslichen organischen Polymeren mit ionisierenden Strahlen ist Stand der Technik und wird beispielsweise zum Aushärten von Farben, Lacken, Beschichtungen und Klebern und dem Vernetzen dünner Schichten und Kunststoffolien benutzt. Bei dieser Strahlenvernetzung werden neue kovalente Kohlenstoff-Kohlenstoftbindungen gebildet und die Beständigkeit gegenüber Chemikalien, mechanische Beanspruchung und Wärme wird hierdurch entscheidend verbessert. Viele thermoplastische Elastomere eignen sich für die Strahlenvemetzung, beispielsweise Polyethylen und dessen Copolymere, Polyurethane, Polyamide, und unter Zusatz von Vernetzungshilfsmitteln Polyvinylchlorid, Ethylen-/Tetrafluorethylencopolymerisate, Polyvinylidenfluorid und andere. Auch bei der radikalisch induzierten Pfropfpolymerisation und Block-Copolymerisation setzt man Hochenergiestrahlen zum Auslösen der Startreaktionen ein. Durch Strahlenbehandlung lassen sich jedoch Atombindungen nicht nur neu knüpfen, sondern auch gezielt abbauen. Effekte, die zur Degradation von synthetischen Polymeren führen, macht man sich bei der Röntgenstrahllithographie und der Elektronenstrahiätze zur Erzeugung mikroelektronischer Schaltkreise zunutze (Wolfram Schnabel,: „Polymer Degradation. Principles and practical applications.", Carl Hanser Verlag, München 1981, Seite 131).

Die Strahlenbehandlung von Polysaccharidpolymeren mit natürlicher Rohstoffbasis ist keine allgemein verbreitete Technologie und auch nicht Gegenstand spezieller Fachliteratur, die spärlichen Veröffentlichungen zu diesem Thema sind wenigen Beiträgen innerhalb des Patentliteraturwesens vorbehalten.

Die US-Patentschrift 2,895,891 beschreibt die Vernetzung von salzfreien nichtionischen Celluloseethern mit Elektronenstrahlen von 50 MeV, die zu wasserunlöslichen Produkten führt. Die US-Patentschrift 3,108,890 lehrt ein Verfahren zum Verhindern der Viskositätsabnahme von Lösungen bestrahlter Celluloseether nach Herstellung der Lösung durch ausreichende Zugabe alkalisierender Verbindungen, so daß die pH-Werte der Lösungen zwischen 5,5 und 11,5 eingestellt werden.

Die DE-OS 1928045 beschreibt die Herstellung von Methylcelluloseethern und Hydroxipropylmethylcelluloseethern mit niedrigen Viskositätsgraden in Form von Einzelteilchen mit einer bestimmten Schichtdicke durch Elektronenstrahlen mit einer Energie von 0,3 - 10 MeV.

Die DE-OS 1928046 vermittelt die Behandlung von Hydroxipropylmethylcellulose mit GammaStrahlen einer Gesamtdosis von 1,4 - 1,3 Mrad bei Temperaturen von 75 - 125 °C und einer Dosisleistung von 10 - 2000 Krad/Stunde. Dies führt zu wasserlöslichen Celluloseethern mit niedriger Viskosität.

Die US-Patentschrift 4,420,611 offenbart die nachträgliche thermische Behandlung von bestrahlter Carboximethylcellulose bei Temperaturen von 50 - 150 °C, vorzugsweise 70 - 90 °C. Die thermische Behandlung erfolgt sowohl in Form der Celluloseetherpulver als auch in Solventien, die für Carboximethylcellulose kein Lösevermögen besitzen. Bei beiden Behandlungsprozessen wird Alkali in Form von 0,1 - 2,0 % Natriumbicarbonat, bezogen auf Celluloseether, eingesetzt.

EP 0 708 113 A1 beschreibt ebenfalls die Elektronenstrahlbehandlung von Methylcelluloseethern oder nichtionischen und ionischen Methylcellulosemischethern mit mittleren Molmassen von 50000 bis 500000 g/mol unter Zusatz einer Base mit Energiedosen zwischen 5 bis 500 kGy. Die Schüttgewichte der der zu bestrahlenden Celluloseether liegen zwischen 0,2 und 0,7 g/cm$^3$ ,der Zusatz an Alkali beträgt besonders bevorzugt 0,1 - 1 Gewichtsprozent bezogen auf Celluloseether. Die nach diesem Verfahren hergestellten niedermolekularen Celluloseether werden als Überzugsmaterial für feste Dosiereinheiten, als Zusatz in keramischen Massen, in Kosmetik-Zubereitungen oder als Polymerisationshilfsmittel vorgeschlagen.

Der Zusatz von Alkali, vor oder nach der Bestrahlung, oder auch später beim Ansetzen der Celluloseetherlösungen, ist notwendig, da beim Bestrahlen von Celluloseethern saure Gruppen gebildet werden, was sich in einer pH-Wert Erniedrigung in den Celluloseetherlösungen ausdrückt. Wird dieser niedrige pH-Wert nicht kompensiert, sind die aus den bestrahlten Celluloseethern bereiteten Lösungen nicht viskositätsstabil, sondern unterliegen einem weitergehenden Viskositätsabbau in Form einer schleichenden sauren Hydrolyse.

Die vergleichbare Bestrahlung von Cellulose führt nicht zu kaltwasserlölichen Produkten.

Die Bestrahlung von Stärke führt ebenso nicht zu kaltwasserlöslichen Produkten. Der Einfluß ionosierender Strahlen auf Stärke ist von großem Interesse, da sich stärkehaltige Früchte, Gemüse und Getreide zum Zwecke der bakteriellen und parasitären Dekontamination und folglich zur besseren Haltbarmachung und verlustfreien Einlagerung für Strahlenbehandlungen geeignet sind.

Bei der Bestrahlung von Kartoffeln mit Energiedosen von 1,5 bis 15 kGy wurde gefunden, daß die Bestrahlung einen Einfluß auf das Retrogadationsverhalten der, nach 14 Tagen Einlagerung bei einer Lagertemperatur von 4 - 5 °C, aus diesen Kartoffeln isolierten Stärke hat (S.Bachmann, S.Witkowski, M.Pietka,; J. Radioanal. Nuel. Chem., Letters 118, 3, S. 185 - 191, 1987). Nach der Verkleisterung bei den bei Stärken üblichen, notwendigen Temperaturen von mindestens 65 °C wurden niedrigere Viskositätswerte gefunden als für die aus unbestrahlten Kartoffeln gewonnene Vergleichsstärke.

Eine Bestrahlungreihe für Mais-, Kartoffel- und Weizenstärke wurde mit Co-60 Gammastrahlen in sehr hohen Dosen von 43 bis 200,9 kGy durchgeführt. Die höchste Wasserlöslichkeit bei Raumtemperatur zeigte Weizenstärke, die Gesamtlöslichkeit in Wasser bei Raumtemperatur betrug jedoch nur 11,5% (J.Pruzinek, O.Hola,; J. Radioanal. Nucl. Chem., Leiters 118, 6, S. 427-431, 1987). Bei der Bestrahlung von Tapiokastärke wurde eine Koagulation der Stärke und eine Verringerung der Abbaubarkeit durch Glucoamylaseenzyme beobachtet, Kaltwasserlöslichkeit wurde nicht erreicht (T.Kume, N.Tamura,; Starch 39, Heft 3, S. 71 - 74, 1987)

In einer weiteren Ausarbeitung (T.Kume, Saifur Rahman, I.Ishigaki,; Starch 40, Heft 4, S. 155 - 158, 1988) wird über den Einfluß der Bestrahlung auf die Stärkefermentation mit Enzymen berichtet, durch eine Gammastrahlendosis von 25 kGy wird die erforderliche Kochtemperatur für die Enzymfermentation von sonst üblichen 75 - 80 °C auf 65 °C herabgesetzt.

Verschiedene Röngten-Kleinwinkelstreuungs-Untersuchungen von gammastrahlenbehandelten im Dosisbereich 10 - 50 kGy bestätigen, daß die Fernordnung der Stärkekörner gestört wird und die relative Kristallität abnimmt und sich des weiteren auch Veränderungen im Nahordnungsbereich der Stärkkörner feststellen lassen, die Stärkekörner bleiben jedoch in ihrer Grundstruktur erhalten, die Bestrahlungen führen nicht zu einer Kaltwasserlöslichkeit (Ciesla, Zoltowski, Mogilevsky,;Starch 44, Nr.11, S. 419-422, 1992. Ciesla, Zoltowski, Mogilevsky,; Starch 43, Nr.1, S. 11 - 12, 1991. Ciesla, Gwardys, Zoltowski,; Starch 43, Nr.7, S. 251 - 253, 1991).

Die Gammabestrahlung von schwarzem und weißem Pfeffer mit Strahlendosen von 5 kGy ergab, daß nach dem 30 minütigem Kochaufschluß und pH-Einstellung mit Natronlauge auf 12,5 zur Erleichterung der Verkleisterung die Viskosität von 10 %-igen Pfefferstärkesuspensionen des bestrahlten Pfeffers immer unter 180 mPas/g Stärke, die des unbestrahlten Pfeffers immer über 190 mPas/g Stärke lag (Journal of Food Science, vol. 59, no 1, page 118 - 120, 1994).

Die Behandlung von Kartoffelstärke mit einer Strahlendosis von 150 kGy ergab ebenfalls keine nennenswerten Auswirkungen auf das Verhalten der Verkleisterungseigenschaften und der Kaltwasserlöslichkeit. Bei einem leicht veränderten Stärkekornverteilungsspektrum wurde bei minimaler Phosphorgehalterhöhung eine Absenkung der durchschnittlichen Verkleisterungstemperatur zwischen 1 und 4 °C beobachtet, je nach Lagertemperatur und Lagerzeit der bestrahlten Kartoffeln (A..Golachowski; Starch 43, Nr. 5, S. 176 - 179, 1991). Die Bestrahlung von Polysacchariden, die zu kaltwasserlöslichen und molgewichtsreduzierten Produkten führt, ist bisher nur für durch starke chemische Derivatisierung kaltwasserlöslich gemachte Celluloseether bekannt.

Stahlungsmodifizierte, molekulargewichtsreduzierte Heteropolysaccharide auf Basis nativer oder derivatisierter handelsüblicher Prudukte sind dagegen unbekannt und einschlägien Anwendungen noch nicht zugänglich.

Es war nicht zu erwarten, daß sich native Endospermmehle oder handelsübliche Algenextrakte durch Strahlenbehandlung in gut kaltwasserlösliche Depolymerisate überführen lassen. Bisher war eine naßchemisch durchgeführte Säurehydrolyse mit anschließender Teilneutralisation oder eine alkalisch oxidative Abbaureaktion zur Durchführung dieser molekulargewichtserniedrigenden Synthese notwendig. Bei üblichen, konventionell durchgeführten Abbaumethoden, fallen Nebenprodukte in Form von Salzen an, die den Ascheund Elektrolytgehalt der Endprodukte unnötig erhöhen und die nur durch apparativ aufwendige und unwirtschaftliche Auswaschprozesse mit anschließendem Lösungsmittelrecycling entfernt werden können. Dies wird für diese Produktgruppe in der industriellen Praxis nicht durchgeführt.

Für den Fachmann besonders überraschend war das Verhalten von Tamarindenkernmehl bei der Strahlmodifikation. Das hydrokolloidale Eigenschaftsprofil von Tamarindenkernmehl ähnelt in vielen Aspekten dem einzelner Stärkesorten. Es war deshalb vollkommen unerwartet, daß bei der Bestrahlung von Tamarindenkernmehl kaltwasserlösliche Produkte entstehen. Dies gilt sowohl für fetthaltige, entfettete,fetthaltig eiweißreduzierte als auch entfettete eiweißreduzierte Tamarindenmehle.

Standardtamarindenkemmehle sind in Form sogenannter 300 mesh- oder 200 mesh- Mehle im Handel. Der Fettgehalt der Standardmehle beträgt je nach müllereitechnologischer Vorbehandlung zwischen 7 und 9 Prozent. Der natürliche Eiweißgehalt technischer Tamarindenmehle liegt bei ca. 16 %. In jüngerer Zeit sind Tamarindenkernmehle, sowohl entfettet als auch nicht entfettet, mit reduziertem Eiweißgehalt erhältlich, die das Anwendungspotential von Tamarindenkernmehlen und deren Derivaten stark erweitern. Der vorliegenden Erfindung lag die Aufgabe zugrunde, elektrolytarme Heteropolysaccharidderivate aus Pflanzenendospermmehlen und Algenextrakten mit guter Kaltwasserlöslichkeit und möglichst niedrigen Aschewerten herzustellen, die im Vergleich zum unbestrahltem Ausgangsmaterial im Molekulargewicht und in der Gesamtkeimzahl reduziert sind. Gleichermaßen bestand die Aufgabe, diese neuen Produkte unter Umgehung von naßchemischen Verfahren unter dem Gesichtspunkt der Wirtschaftlichkeit zur Verfügung zu stellen und die solchermaßen modifizierten Naturpolymere industriellen Nutzungen zugänglich zu machen.

Die Aufgabe wurde dadurch gelöst, daß die Heteropolysaccharide einer jonisierenden Strahlenbehandlung unterworfen werden.

Die erfindungsgemäß erzeugten Heteropolysaccharide eignen sich hervorragend als Verdickungsmittel, Stabilisatoren, Bindemittel, Wasserretentionsmittel, Viskositätsgeber, Rheologische Additive, Texturierungsmittel, Filmbildner, Schutzkolloide, Ballaststoffe und Stellmittel für typische Hydrokolloidanwendungen in der Medizin, Pharmazie, Kosmetik, Nahrungsmittel-,Tierernährungs-, Papier-, Textil-, Druck-, Leder-, Erdöl-, Bergbau-, Sprengstoff-und Baustoffindustrie.

Die folgenden Beispiele sollen die Erfindung näher erläutern.

Beispiele:

Beispiel 1:

Bestrahlung von Natriumalginat, gewonnen aus Laminaria japonica, mit 65% Mannuronsäure und 35% Guluronsäureanteil. Das Schüttgewicht betrug 0,7 g/cm$^3$, die Korngrößenverteilung ist 99,5% kleiner 500 micron, 15% kleiner 100 micron. Der Aschegehalt (ermittelt bei einer Veraschungstemperater von 800 °C) lag bei 16,5% und entsprach nahezu dem theoretischen Wert. Das Natriumalginat wurde in Säcken mit 25 kg Inhalt auf Holzpaletten abgepackt und in einer kommerziellen Co-60 Bestrahlungsanlage mit einer installierten Leistung von 3 Millionen Curie einer Strahlenbehandlung mit einer dosimetrisch ermittelten Minimaldosis von 6 kGy und einer Maximaldosis von 24 kGy, je nach Lage der Dosimeterpositionen in den Zwischenräumen der palettierten Säcke, behandelt.

Die Viskosität der 3 %igen wässrigen Lösung (Gewichtsprozent) des Natriumalginatrohmaterials vor der Strahlenbehandlung betrug 22 000 mPas, gemessen am Rotationsviskosimeter Broofield RVT, 20 UpM, 25 °C, Spindel Nr. 6. Die Viskosität einer ebenfalls 3 %igen Lösung des nach der Bestrahlung des Natriumalginates homogenisierten Materials betrug 360 mPas, die Viskosität einer 8 %igen betrug 16000 mPas. Der Aschegehalt der bestrahlten Probe war im Rahmen der Meßgenauigkeit mit 16,8 % gleich groß wie der Aschegehalt der unbestrahlten Probe.

Beispiel 2:

Aus dem nach Beispiel 1 herstellten Natriumalginat wurde eine Druckverdickung für den Druck von Reaktivfarbstoffen auf Zellwolle (Viskose-Stapelfaser) nach folgender Rezeptur hergestellt: 80 gramm Natriumalginat werden an einem Schnellrührer in 920 ml Wasser klumpenfrei eingerührt. Nach 20 Minuten Rührzeit und 100 Minuten Ausquellzeit ist die Lösung ausgequollen und steht als Stammverdickung für die die Bereitung der Reaktivdruckpaste zur Verfügung. Die Reaktivdruckpaste hatte folgende Zusammensetzung:

500 g Alginatstammverdickung (8%)
30 g Reaktivfarbstoff vom Monochlortriazintyp (Cibacron ® marineblau 12 R-P)
100 g Harnstoff
15 g Natriumbicarbonat
15 g Natriumcarbonat
10 g meta-nitrobenzolsulfonsaures Natriumsalz (Ludigol ®)
330 g Wasser

Es wurde auf einer Buser Flachdruckmaschine im Filmdruckverfahren über eine Schablone Estal Mono 74 T gedruckt. Nach dem Trocknen in der Mansarde wurde bei 110 °C im Dampfer sieben Minuten lang fixiert, nachgewaschen und getrocknet. Der Druckausfall entsprach bezüglich der Farbausbeute, des Kontourenstandes, der Egalität und der Brillianz marktüblichen niederviskosen Reaktivdruckverdickungsmitteln auf Natriumalginatbasis. Der Warengriff war weich, der Druck zeigte keinerlei Verhärtungen.

Beispiel 3:

80 g eines handelsüblichen 200 mesh Guarmehls, entsprechend einer DIN - Kornobergrenze von 75 micron, wurden in einer Polyethylenfolie so geglättet und eingeschweißt, daß die maximale Schichtdicke ca. 1,5 cm betrug. Anschließend wurde mit einem Elektronenstrahl von 2,0 MeV Beschleunigungsenergie aus einem Experimental - Van de Graaff Generator mit einer an das Substrat abgegebenen errechneten Gesamtdosis von 50 kGy strahlenmodifiziert.

Die Ausgangsviskosität des Guarkernmehles in Wasser betrug in 1 %iger Lösung vor der Bestrahlung 5400 mPas. Die Gesamtkeimzahl der Probe vor der Bestrahlung wurde mit 56000 KBE (kolonienbildende Einheiten) ermittelt, nach der Bestrahlung betrug die Gesamtkeimzahl weniger als 100/g. Das mittlere Molekulargewicht wurde durch den Elektronenbeschuß auf einen Viskositätswert von 20% in Wasser = 150 mPas reduziert. Die Lösung des strahlenbehandelten Guarmehles war für das bloße Auge sichtbar klarer als die des unbehandelten Mehles.

Das so hergestellte, stark depolymerisierte Guannehl ist beispielsweise geeignet, um in Backrezepten als Ballaststoff den Zuckeranteil teilweise zu ersetzen und so ein kalorienärmeres Gebäck zu erhalten.

Beispiel 4 a (Vergleichsbeispiel):

Ein Knetteig für einen Bananen-Sauerkirschkuchen wurde laut Rezept folgendermaßen bereitet:

150 g instantisiertes Weizenmehl Typ 405
eine gehäufte Messerspitze handelsübliches Backpulver
120 g Backfett
eine Prise Salz
1 Ei
1 Beutel handelsübliches Puddingpulver mit Zitronengeschmack
1 Beutel Vanillizucker laut Rezeptangabe
geringe Mengen an Backaromen Zitrone und Arrak
70 g Zucker

Die Masse wird verknetet, ausgewellt und in eine gefettete Springform gegeben.
Backhitze: Strom 180 °C. Backzeit: 20-25 Min.
Nach dem Backen wird mit Sauerkirschmarmelade bestrichen und mit Bananen und entsteinten Sauerkirschen belegt.

Beispiel 4 b (erfindungsgemäß):

Der Knetteig wurde wie in Beispiel 4 a zubereitet. 44 g der Zuckermenge aus Vergleichsbeispiel 4 a wurden ersetzt durch 43 g depolymerisiertes Guarmehl aus Beispiel 3 mit einer darin einhomogenisierten Süßstoffpulvermenge, die 10 pulverisierten Stückchen eines handelsüblichen Süßstoffes auf Basis Natriumcyclamat und Saccharinnatrium (Konzentrationsverhältnis 10:1) entsprach.
Die organoleptische Prüfung des fertigen Kuchen nach Beispiel 4 b und ergab im Vergleich zu Beispiel 4 a keine spürbaren Beeinträchtigungen.

Beispiel 5:

Als Ausgangsmehl für die Bestrahlung diente entfettetes und eiweißarmes handelsübliches Tamarindenkernmehl der Korngröße 200 mesh. Der Restfettgehalt des Tamarindenkernmehles, ermittelt durch 24-stündige Extraktion mit Chloroform in einer Soxleth-Extraktionsapparatur, betrug 1,1 %. 80 g Tamarindenmehl mit einer -Schüttdichte von 510 g/l wurden mit einer Schichtdicke von etwa 1,5 cm in eine Polyethylenfolie eingeschweißt und mit einer Dosis von 5,5 kGy aus einem 2 MeV van de Graaff Generator elektronenbestrahlt. Die Kaltviskosität des Tamarindenkernmehles betrug in 10 %iger Konzentration 18 000 mPa. s, gemessen am Brookfield RVT bei 20 UpM, 25 °C, Spindel No.6. Der Kochansatz dieses behandelten Mehles (20 Min. erhitzen auf 70 °C mit anschließendem Abkühlen und Wasserausgleich ) ergab eine Viskosität von ebenfalls 18 000 mPa.s. Dies zeigt, daß durch die erfindungsgemäße Behandlung mit ionisierenden Strahlen ein vollständiger Viskositätsaufschluß erfolgt, das Produkt wurde in eine vollständige Kaltwasserlöslichkeit überführt.

Beispiel 6:

Verdickungsmittel finden häufig Verwendung in der Bauindustrie als Zusätze zu Putz- und Spachtelmassen, Fließenklebern, Trockenmörteln und ähnlichen Baustoffmischungen.
Bei der Herstellung von Putzmischungnen auf Basis Zement oder Gips werden seit langem Stellmittel auf Basis Celluloseether oder/und Stärkederivaten zugesetzt, die die Verarbeitbarkeit, die Festigkeitseigenschaften, die Haftung auf dem Untergrund, die Offenzeiten und andere anwendungstechnisch wichtige Parameter wie z.B. das Standvermögen die Versteifungsgeschwindigkeit und das Wasserrückhaltevermögen günstig beeinflussen.
Im folgenden wird. die Verwendbarkeit des nach Beispiel 5 hergestellten Tamarindenmehles als Additiv in einer Putzmischung mit Leicht- und Schwerzuschlastoffen auf Basis Calciumsulfathalbhydrat erläutert, die mit marktüblichen Gipsspritzmaschinen verarbeitet werden kann.

Beispiel 6a (Vergleichsbeispiel):

| Betacalciumsulfathalbhydrat | 80 GHT |
|---|---|
| Kalkstein (Körnung >0,2 <1,0 mm) | 12 GHT |
| Perlit (gemahlen) | 5 GHT |
| Methylcellulose | 0,5 GHT |
| Kalkhydrat | 2 GHT |
| Hydroxipropylstärke | 0,3 HTG |
| Verzögerer | geringe Mengen |
| Wasser/Gips Faktor | 0,70 - 0,78 % |

Beispiel 6b (erfindungsgemäß):

| Betacalciumsulfathalbhydrat | 80 GHT |
|---|---|
| Kalkstein (Körnung >0,2 <1,0 mm) | 12 GHT |
| Perlit (gemahlen) | 5 GHT |
| Methylcellulose | 0,5 GHT |
| Kalkhydrat | 2 GHT |

(fortgesetzt)

| Tamarindenkernmehl gemäß Beispiel 5 | 0,3 HTG |
| Verzögerer | geringe Mengen |
| Wasser/Gips Faktor | 0,70 - 0,78 % |

Die Putzmischung gemäß Beispiel 6b ist bezüglich Ausbreitmaß, Untergrundhaftung und Ergiebigkeit und Verarbeitbarkeit gleichwertig zur Putzmischung gemäß Beispiel 6a.

Gefügespannungen mit Rissbildung als Folge werden bei keinem der beiden ausgehärteten Putze beobachtet.

Beispiel 7:

1000 kg handelsübliches fetthaltiges 300 mesh Tamarindenkernmehl werden in einer kommerziellen Co-60 Bestrahlunganlage im Palettendurchlaufverfahren mit einer mittleren Energiedosis von 12 kGy bestrahlt. Nach der Bestrahlung wurde das Produkt in einem Doppelwellenmischer homogenisiert und die analytisch relevanten Basisdaten ermittelt. Die Viskosität des bestrahlten Mehles betrug als Kaltansatz in 10 %iger Konzentration 18000 mPa. s. Der parallel durchgeführte Kochansatz zeigte, daß das Tamarindenmehl im wesentlichen aufgeschlossen war.

Zur speziellen Beurteilung von Druckverdickungsmitteln auf deren Eignung für den Schablonendruck werden den Fachleuten vertraute, benutzerdefiniert standardisierte Methoden angewandt, die vergleichende Rückschlüsse auf die Sauberkeit der Verdickungsmittelpasten zulassen. Eine bestimmte Menge eines Verdickungsmittelansatzes mit einer definierten Konzentration an Verdickungsmittelfeststoff wird unter Anwendung eines Vakuums über ein Siebgewebe festgelegter Maschenweite abgesaugt. Die Absaugzeit sowie der Quellkörperrückstand auf dem Siebgewebe liefern zuverlässige Aussagen über die Brauchbarkeit eines Verdickungsmittels für den Filmdruck über Rotationsschablonen oder Flachdruckschablonen.

Die industrieüblichen Analysenparameter des unbehandelten und des behandelten Mehles sind nachstehend aufgelistet:

| Tamarindenmehl 300 mesh | behandelt | unbehandelt |
| --- | --- | --- |
| Aussehen | hellbeiges Puver | hellbeiges Pulver |
| Wassergehalt | 4,7% | 4,8% |
| Aschegehalt | 2,3% | 2,3% |
| Viskosität 10 % (25°C) | 18000 mPa.s | Nicht meßbar, sitzt ab |
| pH-Wert | 6,8 | 7,6 |
| Fettgehalt | 7,6% | 7,4% |
| Filtration 71 micron | 34 sec | unfiltrierbar |

Beispiel 8

Das nach Beispiel 7 hergestellte Tamarindenkernmehl verhält sich als Verdickungsmittel bezüglich der Sauberkeit und der Verträglichkeit mit basischen Farbstoffen sehr vorteilhaft, so daß es als Verdickungsmittel für den Druck auf acrylischen Substaten geeignet ist. Eine Druckpaste für den Druck auf Polyacrylnitril mit kationischen Farbstoffen wurde nach folgender Rezeptur hergestellt:

| 35 g | C. I. Basic Yellow 11 |
| 5 g | C. I. Basic Blue 1 |

(fortgesetzt)

| 600 g | Verdickerlösung |
|---|---|
| 20 g | Essigsäure 30 %ig |
| 20 g | Luprintan PFD ® |
| 10 g | Thiodiethylenglycol |
| x g | Ausgleich |
| 1000 g | Druckpaste |

Die Verdickerlösung bestand

- Im Falle A aus 60 Teilen alkalisch oxidativ depolymerisiertem Guar und 40 Gewichtsteilen Britsh Gum
- Im Falle B aus 60 Gewichtsteilen Carboximethylguarmehl und 40 Teilen British Gum
- Im Falle C aus 90 Gewichtsteilen Tamarindenkernmehl nach Beispiel 7 und 10 Gewichtsteilen British Gum

Die Druckpasten wurden viskositätsgleich eingestellt und auf Polyacrylnitril-Musselin gedruckt, getrocknet und später bei 102 °C im Sattdampf 30 Minuten fixiert. Die Drucke nach Rezeptur B waren stippig, da sich offenbar Agglomerate zwischen kationischem Farbstoff und anionischen Galaktomannanether gebildet hatten. Gegenüber Rezeptur A zeigte Rezeptur C den weitaus egaleren und brillanteren Druckausfall.

Beispiel 9:

Dieses Beispiel veranschaulicht die Strahlenmodifizierung von Rotalgenextrakten. Rotalgenextrakte sind wertvolle Stabilisatoren für milchhaltige Produkte wie Speiseeis oder Milchgetränke. Früher stand als klassische Rohstoffquelle für carrageenhaltige Algenextrakte nur Irisches Moos (Irish Moss, Chondrus crispus) zur Verfügung, das in Form gesäuberter, pulverisierter Algen jahrhundertelang zur Herstellung eines als „blanc mange" bekannten Puddings in der Bretagne und in Irland verwendet wurde. Zu diesem Zwecke wurde das gemahlene Algenprodukt in Milch, bedarfsweise unter Zusatz von Zucker und Aromastoffen sowie weiterer Zutaten, erhitzt und danach abgekühlt. Es wird auf diese Weise ein puddingähnliches Produkt erhalten. Später wurden mit Gigartina acicularis und Gigartina pistillata Rohstoffquellen erschlossen, die der Chondrus crispus Alge in der Zusammensetzung der Carrageenfraktionen ähnelten (wechselnde Mengen an kappa- und lambda-Carrageen mit hohen lambda-Anteilen). Eine wichtige Algenart mit großer wirtschaftlicher Bedeutung ist gegenwärtig Eucheuma cottonii. Diese Algenart wird in Südostasien in Algenfarmen kultiviert und angebaut. Eucheuma cottonii ist bekannt für seinen sehr hohen Gehalt an kappa-Carrageen. Eucheuma cottonii besitz fast keine lambda-Carrageen Fraktion, sondern enthält ebenso wie beispielsweise Eucheuma edule oder Eucheuma striatum fast nur kappa-Carrageen. Erweiterte Kenntnis bezüglich der Polymerstruktur der einzelnen Carrageentypen und fortschrittliche Produktionsverfahren machen es heute möglich, die Eigenschaften der einzelnen Carrageene maßgeschneidert einzustellen. So kann z.B. ein kappa-Carrageen-Gel die Elastizität eines iotaCarrageen-Geles und die Kaltwasserlöslichkeit eines lambda-Carrageens erhalten.
200 g kappa-Carrageen aus Eucheuma cottonii werden in eine Polyethylenfolie eingeschweißt und einer Gamma-Strahlenbehandlung mit einer Dosis von 2,1 kGy behandelt. Die Vikosität des Carrageens vor der Bestrahlung betrug bei einer Temperatur von 75 °C in 1,5 %iger Lösung 72 mPa.s, gemessen am Brookfield LV - Viskosimeter bei 12 UpM. Für niedrige Viskositätswerte unter 20 mPa.s ist es aus Gründen der Meßgenauigkeit zweckmäßig, als Zusatzmeßeinrichtung den Brookfield UL-Adapter zu verwenden, der bei einer Umdrehungsgeschwindigkeit der Meßspindel von 12 Umdrehungen pro Minute einen Viskositätsbereich von 0 - 50 mPa.s abdeckt. Einem Vollausschlag der Meßskala von 100 Skalenteilen würde in diesem Falle eine Viskosität von 50 mPa.s entsprechen. Die Meßkörper und die Rotationsgeschwindigkeiten sind bei Brookfield-Rotationsviskosimetern so zu wählen, daß eine Skalenablesung im Bereich zwischen 20 und 80 Skalenteile angestrebt wird, in diesem Fall ist daß Meßergebnis am genauesten.
Nach der Bestrahlung bertug die Viskosität des Carrageens unter gleichen Meßbedingungen 9 mPa.s.
Aus 82,5 Gewichtsteilen Zucker und 17,5 Teilen Kakao wird eine homogene Mischung hergestellt. Eine Standardmilch mit 2% Butterfett wird bereitet, indem gleiche Volumina Vollmilch und Magermilch gemischt werden. In 53,9 g des Zucker/Kakao - Gemisches werden die Algenextraktproben eingemischt. Als Blindprobe wird ein Carrageen mit einem Milchindex von 250 ppm verwendet. Dies entspricht im hier beschriebenen Test 167 mg. Der Milchindex entspricht derjenigen Menge an Stabilisator, die notwendig ist, um mit dem in der Milchindustrie häufig verwendeten Zahn-Ausflußviskosimeter mit einer Ausflußöffnung von 2,26 mm auf Ausflußzeiten zwischen 32 und 35 Sekunden bei einer Temperatur von 10 °C zu kommen. Es ist einleuchtend, daß normalerweise ein möglichst niedriger Milchindex angestrebt wird, da diese Zahl mit der für ein bestimmtes Fließverhalten notwendigen Einsatzmenge an Stabilisator einhergeht und somit in unmittelbarem Zusammenhang mit der Wirtschaftlichkeit vergleichbarer Stabilisatoren steht.

670 g der Milch mit 2% Fettgehalt werden in ein 1 Liter fassendes Edelstahlgefäß, ausgestattet mit Rührwerk und Thermometer, gegeben. Das Zucker/Kakao/Algenextraktgemisch wird unter Rühren in die Vortex eingestreut und nach Zugabe von 25 ml dest. Wasser zum Ausspülen des Wägebehältnisses der Trockenmischung wird auf einem 77 °C heißem Wasserbad unter Rühren solange erhitzt, bis die Milch eine Temperatur von 71 °C erreicht hat. Danach wird der Becher aus dem Wasserbad genommen und Wasserausgleich auf 750 g (670g + 54g + 25g) vorgenommen. Die Schokoladenmilch wird auf eiern Eisbad auf 10 °C abgekühlt, in eine passende Milchflasche abgefüllt und über Nacht bei 10 °C gelagert.

Am nächsten Tag wird die Schokoladenmilch sowohl nach ihrem Aussehen in der Flasche als auch nach dem Ausgießen in ein 400 ml Becherglas beurteilt, die Auslaufzeit wird erneut gemessen.

Für die Beurteilung einer optimierten Schokoladenmilchformulierung werden viele Faktoren wie Sedimentbildung, Trübung im Bodenbereich der Flasche, Streifenbildung im Bodenbereich, Kräuseln im Flaschenhals als Zeichen beginnender leichter Gelierung, Aufrahmen als Ergebnis stärkerer Gelierung im Flaschenhals,Trennung in einen hellen klaren Oberbereich und einen dunklen kakaoreichen Unterbereich mit Sediment- oder Trübungsbildung, Schlierenbildung im Bereich des Flaschenhalses als Zeichen einer beginnenden Trennung. Diese visuellen Prüfungen sind wichtig und werden von Fachleuten durchgeführt. Die wichtigsten Prüfkriterien, die die Vorteile des erfindungsgemäßen Rotalgenextraktes demonstrieren, sind nachfolgend zusammengefaßt:

| *Alge* | *Chondrus crispus* | *Eu.cottonii standard* | *Eu.cottonii bestrahlt* |
|---|---|---|---|
| Viskosität | 80 | 72 | 9 |
| Auslaufzeit | 34 | 26 | 32 |
| Sediment | Nein | ja | Nein |
| Milchindex | 250 | 357 | 225 |

Die Viskositäten sind bei 75 °C in einer 1,5 %igen Konzentration in Wasser mit dem Brookfield LV-Rotationsviskosimeter bei 12 UpM ermittelt. Der Milchindex ist in ppm angegeben und ein Maß für die zur angegebenen Auslaufzeit notwendige Menge an Algenextrakt.

Die Zahlen zeigen klar den erfindungsgemäßen Vorteil des strahlenbehandelten Eucheuma cottonii Algenextraktes auf.

Beispiel 10:

Dieses Beispiel beschreibt den Einsatz erfindungsgemäß hergestellten Tamarindenkernmehls als Schlichtemittel. In der Textilindustrie ist es allgemein üblich, Garne, die aus einer Vielzahl von Einzeltbden bestehen und die als Kettgarne im Webprozess eingesetzt werden, mit einem Schlichtemittel zu behandeln. Dadurch werden die Garne verstärkt und verfestigt und können den mechanischen Beanspruchungen während des Webprozesses besser standhalten. Bekannte Schlichtemittel für Garne aus Baumwolle oder andere Cellulosefasern enthaltende Stapelfasergarne sind Carboximethylcellulosen, native oder modifizierte Stärken, Polyvinylalkohole, Galaktomannanderivate und Polyacrylate.

Handelsübliches entfettets Tamarindenkernmehl der Körnung 200 mesh und einem reduzierten Eiweißgehalt von 6% werden einer Gamma-Strahlenbehandlung mit eines Dosis von 25 kGy unterworfen. Aus diesem strahlenmodifizierten Tamarindenkernmehl wird in einem Turbokocher (15 min. 105 °C) eine Schlichte für Baumwollgarne folgender Rezeptur hergestellt:

20 kg        modifiziertes Tamarindenmehl
40 kg        Acrylatschlichte 25 %ig, handelsüblich
0,3 kg       Schlichtefett (Stearinsäuremonoglycerid)
240 kg       Wasser

Auf einer siebenzylindrigen Schlichtmaschine werden ca. 3000 m Baumwollgam Nm 68/1 unter üblichen Betriebsbedingungen bei einer Flottentemperatur von 90 °C und einer Flottenaufnahme von ca. 100 % geschlichtet, die Temperatur der Trockenzylinder beträgt 120 - 140 °C. Die geschlichtete Kette hat eine Schlichteauflage von ca. 9,7 Gew.-% bezogen auf das Garntrockengewicht, die Restfeuchte beträgt 8 Gew. -%. Die Kette wird bei einem Schußeintrag von 240/min bei 76% relativer Luftfeuchtigkeit und einer Websaaltemperatur von 20 - 22 °C zu einem Baumwollartikel mit folgenden Gewebedaten verwebt:

| | |
|---|---|
| Kettdichte | 43 Fäden/cm |
| Schußdichte | 43 Fäden/cm |
| Schußgarn | Nm 60/1 |
| Anzahl der Kettfäden | 6050 |
| Bindungsart | Leinwand 1/1 |

Die Anzahl der Kettfadenbrüche bezogen auf 10 000 Schußfäden lag bei 0,12. Das erfindungsgemäße Schlichtemittel ist salzfrei und stellt auch in seiner molekularen Struktur kein Salz dar. Somit wird das Webgeschirr geschont und die Korrosion unterdrückt. Das strahlenmodifizierte Tamarindenmehl eignet sich allein oder in Abmischung mit den erwahnten konventionellen Schlichtemitteln zur Verwendung in Textilschlichten. Es zeichnet sich durch gute Auswaschbarkeit, auch unter alkalischen Flottenbedingungen, und hervorragende biologische Abbaubarkeit aus.

**Patentansprüche**

1.  Modifizierte Heteropolysaccharidabkömmlinge pflanzlichen Ursprungs, dadurch gekennzeichnet, dass sie einer radiolytischen Behandlung mit ionisierenden Strahlen unterworfen werden.

2.  Modifizierte Heteropolysaccharidabkömmlinge nach Anspruch 1, dadurch gekennzeichnet, dass die radiolytische Behandlung mit ionisierenden Photonenstrahlen mit Hilfe einer kommerziell zugänglichen Strahlenquelle des Typs Cobalt-60 oder Caesium-137 oder mit ionisierenden Korpuskularstrahlen mit Hilfe eines kommerziell zugänglichen, kontinuierlich arbeitenden Elektronenstrahlbeschleunigers im Energiebereich 2 - 50 MeV entsprechend einer absorbierten Energiedosis von 1 kGy bis 500 kGy erfolgt.

3.  Modifizierte Heteropolysaccharidabkömmlinge nach Anspruch 1, dadurch gekennzeichnet, dass die Heteropolysaccharidabkömmlinge pflanzlichen Ursprungs aus den Endospermabschnitten von Leguminosensamen oder aus Algenextrakten stammen.

4.  Modifizierte Heteropolysaccharidabkömmlinge nach Anspruch 3, dadurch gekennzeichnet, dass die Endospermabschnitte aus den Samen von Cyamopsis tetragonoloba (Guarbohne), von Ceratonia siliqua (Johannisbrotbaum), von Cesalpinia spinosa (Tarabaum), von Cassia tora syn. obtusifolia, von Prosopis juliflora, von Sesbania bispinosa syn.aculeata und im wesentlichen Galaktomannan und aus den Samen von Tamarindus indica (Tamarindenbaum) stammen und im wesentlichen Galaktoxyloglucan enthalten.

5.  Modifizierte Heteropolysaccharidabkömmlinge nach Anspruch 3, dadurch gekennzeichnet, dass die Algenextrakte aus Braunalgen der Arten Laminaria japonica, Laminaria digidata, Laminaria hyperborea, Ascophyllum nodosum, Lessonia nigrescens, Ecklonia maxima, Macrocystis pyrifera oder Rotalgen der Pflanzenfamilien Solieraceae, Gigartinaceae, Hypneaceae stammen und aus Alginsäurederivaten, vorzugsweise Natriumalginat, oder Carrageenan bestehen.

6.  Modifizierte Heteropolysaccharidabkömmlinge nach Anspruch 4, dadurch gekennzeichnet, dass die Heteropolysaccharidabkömmlinge aus Galaktomannan oder Galaktoxyloglucan gegebenenfalls in veretherter oder veresterter Form vorliegen.

7.  Verwendung von modifizierten Heteropolysaccharidabkömmlingen nach Anspruch 1 als Hydrokolloide in wässrigen Systemen.

8.  Verwendung von modifizierten Heteropolysaccharidabkömmlingen nach Anspruch 7, insbesondere als Schlichtemittel und Druckverdickungsmittel in der Textilindustrie, als Zusatz zur Masse, zu Streichfarben und Beschichtungen in der Papierindustrie, als Ballststoff in Nahrungsmitteln, als Gelier- und Verdickungsmittel in Nahrungsmitteln und Tierfutter, als Verdickungsmittel und Schutzkolloid in kosmetischen Zubereitungen, in Überzugsmassen für Tabletten und Dragees, als Additiv zu Maschinenputzen, Gipsmassen, Trockenmörteln, Fliesenklebern, Fugenfüllern und keramischen Massen in der Baustoffindustrie, als Tondrücker bei der Kalisalzflotation, als Flockungsmittel in der Bergbauindustrie, als Zusatz in Bohrspülungen und Explosivstoffen und als Polymerisationshilfsmittel.

**9.** Modifizierte Heteropolysaccharidabkömmilinge nach Anspruch 3, dadurch gekennzeichnet, daß sie nach der Behandlung mit ionisierenden Strahlen einen ähnlich hohen Aschegehalt und Fremdelektrolytgehalt aufweisen wie vor der Behandlung.

**10.** Modifizierte Heteropolysaccharidabkömmlinge nach Anspruch 3, dadurch gekennzeichnet, daß sie nach der Behandlung mit ionisierenden Strahlen eine gegenüber dem Ausgangsheteropolysaccharid um mindestens eine Zehnerpotenz reduzierte Gesamtkeimzahl aufweisen.

Europäisches
Patentamt

**EUROPÄISCHER RECHERCHENBERICHT**

Nummer der Anmeldung

EP 00 10 9065

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | KING K. ET AL.: "The effect of gamma irradiation on guar gum, locust bean gum. gum tragacanth and gum karaya" FOOD HYDROCOLLOIDS, Bd. 6, Nr. 6, 1993, Seiten 559-569, XP000933944 * Zusammenfassung * | 1-4,6-8 | C08B37/00 C08B37/04 C08B37/14 C08L5/04 C08L5/14 |
| X | DATABASE WPI Week 199514 Derwent Publications Ltd., London, GB; AN 1995-101801 XP002144568 "Antibacterial substance having high antibacterial activity – obtd. by irradiating polysaccharide with ionising radiation" & JP 07 025772 A (JAPAN ATOMIC ENERGY RES INST), 27. Januar 1995 (1995-01-27) * Zusammenfassung * | 1-3,5 | |
| X | DATABASE WPI Week 1993 Derwent Publications Ltd., London, GB; Class 02, AN 1993-013404 XP002144569 "Prepn. of solid culture medium without using heat – by pasteurising tamarind gum, opt. with other medium, with gas and gamma ray, then mixing with solvent." & JP 04 341177 A (AJINOMOTO KK), 27. November 1992 (1992-11-27) * Zusammenfassung * | 1-4,6,7 | RECHERCHIERTE SACHGEBIETE (Int.Cl.7) C08B |

-/--

Der vorliegende Recherchenbericht wurde für alle Patentansprüche erstellt

| Recherchenort | Abschlußdatum der Recherche | Prüfer |
|---|---|---|
| DEN HAAG | 9. August 2000 | Mazet, J-F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**Europäisches Patentamt**

# EUROPÄISCHER RECHERCHENBERICHT

Nummer der Anmeldung

EP 00 10 9065

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | CHEMICAL ABSTRACTS, vol. 130, no. 6, 8. Februar 1999 (1999-02-08) Columbus, Ohio, US; abstract no. 65455, "Change in functional properties in polysaccharides irradiated by electron beam." XP002144567 * Zusammenfassung * & SAKAUE KAZUSHI ET AL.: SHOKUHIN SHOSHA, Bd. 33, Nr. 1,2, 1998, Seiten 10-18, JP --- | 1,3,4,6 | |
| X | WO 92 12789 A (BRANDEIS UNIVERSITY) 6. August 1992 (1992-08-06) * Seite 5, Zeile 34 – Seite 7, Zeile 25 * ----- | 1,3,4 | |
| | | | **RECHERCHIERTE SACHGEBIETE (Int.Cl.7)** |

Der vorliegende Recherchenbericht wurde für alle Patentansprüche erstellt

| Recherchenort | Abschlußdatum der Recherche | Prüfer |
|---|---|---|
| DEN HAAG | 9. August 2000 | Mazet, J-F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes Dokument

EPO FORM 1503 03.82 (P04C03)

**EP 1 050 544 A1**

## ANHANG ZUM EUROPÄISCHEN RECHERCHENBERICHT
## ÜBER DIE EUROPÄISCHE PATENTANMELDUNG NR.

EP 00 10 9065

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-08-2000

| Im Recherchenbericht angeführtes Patentdokument | Datum der Veröffentlichung | Mitglied(er) der Patentfamilie | Datum der Veröffentlichung |
|---|---|---|---|
| JP 07025772 A | 27-01-1995 | KEINE | |
| JP 04341177 A | 27-11-1992 | KEINE | |
| WO 9212789 A | 06-08-1992 | US 5230832 A | 27-07-1993 |
| | | AT 150664 T | 15-04-1997 |
| | | DE 69218586 D | 30-04-1997 |
| | | DE 69218586 T | 03-07-1997 |
| | | DK 569494 T | 14-04-1997 |
| | | EP 0569494 A | 18-11-1993 |
| | | ES 2099249 T | 16-05-1997 |
| | | JP 7086503 B | 20-09-1995 |
| | | JP 6503174 T | 07-04-1994 |

EPO FORM P0461

Für nähere Einzelheiten zu diesem Anhang : siehe Amtsblatt des Europäischen Patentamts, Nr.12/82

18